# EUROPEAN PATENT APPLICATION

(11) **EP 4 625 537 A1**
(43) Date of publication of application: **01.10.2025**
(21) Application number: 25166566.7
(22) Date of filing: 27.03.2025
(51) Int. Cl.: H01M 4/36, H01M 4/1395, H01M 10/0567, H01M 4/62, H01M 10/0525, H01M 4/38, H01M 4/02

(54) **SECONDARY BATTERY AND ELECTRONIC APPARATUS**

(30) Priority: 31.03.2024 CN 202410383513
(71) Applicant: Ningde Amperex Technology Ltd., Ningde City, Fujian Province 352100 (CN)
(72) Inventor: LI, Yang, Ningde City, Fujian Province 352100 (CN); REN, Wenchen, Ningde City, Fujian Province 352100 (CN)
(74) Representative: Icosa

(57) **Abstract**

A secondary battery including a negative electrode plate. The negative electrode plate includes a negative electrode current collector and a negative electrode material layer disposed on at least one surface of the negative electrode current collector. The negative electrode material layer includes a negative electrode active material, a binder, and a conductive agent. The negative electrode active material includes a carbon material and silicon-carbon composite particles. Based on a mass of the negative electrode material layer, a mass percentage of silicon element is 4.4% to 10.5%, and a mass percentage of carbon element is 85% to 90%. A powder conductivity of the negative electrode material layer is 8 S/m to 15 S/m.

## Description

### TECHNICAL FIELD

This application relates to the field of electrochemical technologies, and in particular, to a secondary battery and an electronic apparatus.

### BACKGROUND

Lithium-ion batteries have been widely used in the fields of electric vehicles, consumer electronics, and large-scale energy storage due to their ultra-high energy density, long cycle life, and low self-discharge characteristics. Negative electrode materials in traditional commercial lithium-ion batteries are graphite materials with low capacity. In recent years, silicon-based materials have been considered to be the most promising negative electrode materials for the next generation due to their high specific capacity, abundant resource reserves, and reasonable lithiation platform. However, silicon-based materials undergo large volume changes during lithiation or delithiation and this can lead to poor cycling performance of lithium-ion batteries.

Researchers have found that a method for nanocrystallization of silicon-based materials can be used to alleviate their structural strain. However, after nanocrystallization, silicon-based materials have a high specific surface area, leading to an increase in interface side reactions during cycling and continuous generation of large amount of solid-state electrolyte (SEI) film. The SEI film contains organic or inorganic components such as lithium carbonate, C-O/C=O, and C-H. In the over-discharge process, the SEI film on the surface of the graphite-based negative electrode may degrade and produce gas within the range of 0% state of charge (SOC) to 10%SOC, resulting in lithium-ion battery swelling and affecting the safety performance. In addition, due to high reaction activity, silicon-lithium alloys formed by the lithiation of silicon-based materials are prone to reacting with the electrolyte and generating an SEI film containing the foregoing organic or inorganic components, and continuous generation of the SEI film on the surface of the silicon-based material occurs during cycling. Therefore, lithium-ion batteries using the silicon-based material have a higher gas production voltage during over-discharge than those using a graphite material, and a too-high gas production voltage during over-charge makes the lithium-ion batteries more prone to gas production during over-charge, reducing the safety performance of the lithium-ion batteries.

### SUMMARY

An objective of this application is to provide a secondary battery and an electronic apparatus, so as to reduce the gas production voltage during over-discharge and the thickness swelling rate during over-charge in the cycling process of the secondary battery, improving the safety performance of the secondary battery. Specific technical solutions are as follows.

A first aspect of this application provides a secondary battery including a positive electrode plate, a negative electrode plate, an electrolyte, and a separator. The negative electrode plate includes a negative electrode current collector and a negative electrode material layer disposed on at least one surface of the negative electrode current collector. The negative electrode material layer includes a negative electrode active material, a binder, and a conductive agent. The negative electrode active material includes a carbon material and silicon-carbon composite particles. Based on a mass of the negative electrode material layer, a mass percentage of silicon element is 4.4% to 10.5%, and a mass percentage of carbon element is 85% to 90%. A powder conductivity of the negative electrode material layer is 8 S/m to 15 S/m. A secondary battery meeting the foregoing characteristics can reduce the gas production voltage during over-discharge and the thickness swelling rate during over-charge in the cycling process of the secondary battery, improving the safety performance of the secondary battery.

In an embodiment of this application, the secondary battery is charged at a constant current of 1C to 4.5 V and discharged at a constant current of 0.5C to 3.0 V for 300 cycles, then discharged at 0.01C to 3.0 V, discharged at 10 mA to 1.0 V, and further discharged at 5 mA to 1.0 V, and a thickness swelling rate of the secondary battery is less than 15%. The thickness swelling rate of the secondary battery after over-discharge is small, and the secondary battery has good safety performance.

In an embodiment of this application, the secondary battery meets at least one of the following characteristics: (1) the silicon-carbon composite particle includes a carbon carrier, elemental silicon, and a carbon coating layer, and an average thickness of the carbon coating layer is 2.5 nm to 12 nm; (2) the carbon material includes at least one of selected from the group consisting graphite, hard carbon, and soft carbon, and based on a mass of the silicon-carbon composite particles and the carbon material, a mass percentage of the silicon-carbon composite particles is 5% to 30%, and a mass percentage of the carbon material is 70% to 95%; or (3) particle size Dᵥ50 of the silicon-carbon composite particles is 5 µm to 12 µm.

In an embodiment of this application, the secondary battery meets at least one of the following characteristics: (1) the binder includes at least one selected from the group consisting of lithium polyacrylate, carboxymethyl cellulose, and polyacrylic acid, and based on the mass of the negative electrode material layer, a mass percentage of the binder is 0.4% to 2.5%; or (2) the conductive agent includes at least one selected from the group consisting of carbon nanotubes, conductive carbon black, carbon fiber, flake graphite, graphene, and conductive polymers, and based on the mass of the negative electrode material layer, a mass percentage of the conductive agent is 0.1% to 0.5%.

In an embodiment of this application, the secondary battery meets at least one of the following characteristics: (1) the binder includes lithium polyacrylate, and a characteristic peak appears at 1550 cm⁻¹ to 1560 cm⁻¹ in an infrared spectrum of powder of the negative electrode material layer; (2) the binder includes lithium polyacrylate, and after the secondary battery is discharged to 3.0 V, based on the mass of the negative electrode material layer, a mass percentage of lithium element is 0.2% to 3%; or (3) the conductive agent includes carbon nanotubes, where a diameter of the carbon nanotubes is 2 nm to 6 nm, preferably 3 nm to 5 nm, and a length of the carbon nanotubes is 3,000 nm to 60,000 nm, preferably 8,000 nm to 20,000 nm.

In an embodiment of this application, a compacted density of the negative electrode material layer is 1.4 g/cc to 1.5 g/cc at a 50% state of charge of the secondary battery. When the secondary battery is at a 50% state of charge, and the compacted density of the negative electrode material layer is within the range in this application, the volumetric energy density of the secondary battery is high, and the contact among the silicon-carbon composite particles, the carbon material, the binders, and the conductive agent is tight, so that the electron transport path is relatively short, the electronic conductivity of the electrode mixture is high, and an appropriate amount of SEI film is formed on the surface of the electrode mixture, allowing to reduce the gas generation from degradation of organic substances in the SEI film, reduce the thickness swelling rate during over-discharge in the cycling process of the secondary battery, and improve the safety performance of the secondary battery. In addition, the electrolyte has good infiltration and this is conducive to the extractable capacity of the negative electrode active material.

In an embodiment of this application, the electrolyte includes a first compound, the first compound includes at least one selected from the group consisting of fluoroethylene carbonate, difluoroethylene carbonate, 1,3-propane sultone, and ethylene sulfate, and based on a mass of the electrolyte, a mass percentage of the first compound is 3% to 8%. With the type and percentage of the first compound in the electrolyte being regulated within the ranges in this application, the reduction potential of the fluorine-containing or sulfur-containing first compound is high, and inorganic components such as lithium fluoride or lithium sulfate that are difficult to decompose and generate gas may be formed preferentially over solvent (for example, carbonate compounds) reduction. These inorganic components are distributed on the surface of the carbon coating layer of the silicon-carbon composite particles, so that the proportion of substances in the SEI film that are difficult to decompose and generate gas can be increased to stabilize the structure of the SEI film, thereby further reducing the thickness swelling rate during over-discharge in the cycling process of the secondary battery and further improving the safety performance of the secondary battery.

A second aspect of this application provides a preparation method of the secondary battery according to any one of the foregoing embodiments, including the following steps: preparing the positive electrode plate, the negative electrode plate, the electrolyte, and the separator, and obtaining the secondary battery by assembling.

A preparation method of the silicon-carbon composite particles in the negative electrode plate includes the following steps:
(1) heating a carbon carrier in an inert atmosphere at a heating rate of 5°C/min to 20°C/min to a temperature T1 of 400°C to 480°C, maintaining the temperature for a period of time t1 between 10 min and 60 min, and then conducting deposition in a silane gas mixture to obtain an intermediate; where a deposition time t2 is 2 h to 30 h; and the silane gas mixture is composed of silane and inert gas, and based on a mass of the silane gas mixture, a mass percentage of silane is 10% to 50%, and a mass percentage of inert gas is 50% to 90%; and
(2) performing carbon coating treatment on the intermediate to obtain the silicon-carbon composite particles; where a method for the carbon coating treatment includes one of a liquid phase method, a gas phase method, or a gas-liquid coupling method; a carbon source includes at least one of coal tar pitch, petroleum pitch, acetylene, propylene, natural gas, ethylene, or cyclohexane; a temperature T2 for the carbon coating treatment is 620°C to 810°C; and a period of time t3 for the carbon coating treatment is 1 h to 6 h.

In an embodiment of this application, the method for the carbon coating treatment includes the liquid phase method, including the following steps: placing the intermediate in an organic solvent containing a carbon source to obtain an organic solution, evaporating the organic solution, and performing the carbon coating treatment in the inert atmosphere to obtain the silicon-carbon composite particles; where the carbon source includes at least one of petroleum pitch or coal tar pitch, the organic solvent includes at least one of tetrahydrofuran, n-hexane, or xylene, the temperature T2 for the carbon coating treatment is 700°C to 810°C, preferably, T2 is 720°C to 810°C, and the period of time t3 for the carbon coating treatment is 1 h to 2 h.

In an embodiment of this application, the method for the carbon coating treatment includes a gas phase method, including the following step: performing the carbon coating treatment on the intermediate in a reducing atmosphere to obtain the silicon-carbon composite particles; where the reducing atmosphere includes at least one of acetylene, propylene, natural gas, ethylene, or cyclohexane, the temperature T2 for the carbon coating treatment is 620°C to 700°C, and the period of time t3 for the carbon coating treatment is 2 h to 6 h.

With the foregoing method to prepare silicon-carbon composite particles, the high temperature for the carbon coating treatment can improve the quality of the carbon coating layer of the silicon-carbon composite particles and increase the degree of graphitization of the carbon coating layer, making the silicon-carbon composite particles have a high powder conductivity. In this way, the conductivity of the electrode mixture is improved and the quality of the SEI film is further improved, so that the generation of organic substances in the SEI film, such as lithium carbonate, lithium carbonate, and proton electrolytes, can be reduced, and the gas generation from degradation of the foregoing organic substances and from consumption of the electrolyte is reduced, thereby reducing the thickness swelling rate during over-discharge in the cycling process of the secondary battery and improving the safety performance of the secondary battery. Moreover, the high conductivity of the electrode mixture may promote the increase of the proportion of inorganic components in the SEI film to make the inorganic components more resistant to over-discharge, thereby reducing the gas generation voltage during over-discharge in the cycling process of the secondary battery and improving the safety performance of the secondary battery.

A third aspect of this application provides an electronic apparatus including the secondary battery according to any one of the foregoing embodiments or a secondary battery prepared by using the preparation method according to any one of the foregoing embodiments. Therefore, the electronic apparatus provided in this application has good safety performance.

This application has the following beneficial effects.

This application provides a secondary battery and an electronic apparatus. The secondary battery includes a positive electrode plate, a negative electrode plate, an electrolyte, and a separator. The negative electrode plate includes a negative electrode current collector and a negative electrode material layer disposed on at least one surface of the negative electrode current collector. The negative electrode material layer includes a negative electrode active material, a binder, and a conductive agent. The negative electrode active material includes a carbon material and silicon-carbon composite particles. Based on a mass of the negative electrode material layer, a mass percentage of silicon element is 4.4% to 10.5%, and a mass percentage of carbon element is 85% to 90%. A powder conductivity of the negative electrode material layer is 8 S/m to 15 S/m. A secondary battery meeting the foregoing characteristics can reduce the gas production voltage during over-discharge and the thickness swelling rate during over-charge in the cycling process of the secondary battery, improving the safety performance of the secondary battery.

Certainly, when any product or method of this application is implemented, all advantages described above are not necessarily demonstrated simultaneously.

### BRIEF DESCRIPTION OF DRAWINGS

To describe the technical solutions in some embodiments of this application or in the prior art more clearly, the following briefly describes the accompanying drawings required for describing these embodiments or the prior art. Apparently, the accompanying drawings in the following descriptions show merely some embodiments of this application, and persons of ordinary skill in the art may still derive other embodiments from these accompanying drawings.
FIG. 1 is a high-resolution transmission electron microscope image of silicon-carbon composite particles in Example 1-1 of this application;
FIG. 2 is an infrared spectrum of powder of negative electrode material layer in Example 1-1 of this application; and
FIG. 3 shows curves of voltage and thickness over time for the lithium-ion battery in Example 1-1 of this application as a function of time.

### DETAILED DESCRIPTION

The following clearly and completely describes the technical solutions in some embodiments of this application with reference to the accompanying drawings in some embodiments of this application. Apparently, the described embodiments are only some rather than all of these embodiments of this application. All other embodiments obtained by persons skilled in the art based on this application shall fall within the protection scope of this application.

It should be noted that in specific embodiments of this application, an example in which a lithium-ion battery is used as a secondary battery is used to illustrate this application. However, the secondary battery of this application is not limited to the lithium-ion battery.

This application provides a secondary battery, which includes a positive electrode plate, a negative electrode plate, an electrolyte, and a separator, the negative electrode plate includes a negative electrode current collector and a negative electrode material layer disposed on at least one surface of the negative electrode current collector, the negative electrode material layer includes a negative electrode active material, a binder, and a conductive agent, the negative electrode active material includes a carbon material and silicon-carbon composite particles. Based on a mass of the negative electrode material layer, mass percentage W1 of silicon element is 4.4% to 10.5%. For example, W1 may be 4.4%, 4.5%, 4.7%, 4.9%, 5%, 5.5%, 5.7%, 5.9%, 6%, 6.5%, 6.7%, 6.9%, 7%, 7.5%, 7.7%, 7.9%, 8%, 8.5%, 8.7%, 8.9%, 9%, 9.5%, 9.7%, 9.9%, 10%, 10.5%, or a range defined by any two of the foregoing values. Mass percentage W2 of carbon element is 85% to 90%. For example, W2 may be 85%, 85.5%, 86%, 86.5%, 87%, 87.5%, 88%, 88.5%, 89%, 89.5%, 90%, or a range defined by any two of the foregoing values. Powder conductivity σ of the negative electrode material layer is 8 S/m to 15 S/m. For example, σ may be 8 S/m, 9 S/m, 10 S/m, 11 S/m, 12 S/m, 13 S/m, 14 S/m, 15 S/m, or a range defined by any two of the foregoing values. The "negative electrode material layer disposed on at least one surface of the negative electrode current collector" means that the negative electrode material layer may be disposed on one surface of the negative electrode current collector in its thickness direction, or may be disposed on two surfaces of the negative electrode current collector in its thickness direction. It should be noted that the "surface" herein may be an entire region or a partial region of the negative electrode current collector. This is not particularly limited in this application, provided that the objectives of this application can be achieved. In this application, based on the mass of the negative electrode material layer, mass percentage W3 of the negative electrode active material is 97% to 99.5%.

The inventors have found through research that optimizing the conductivity of the electrode mixture is crucial for improving the electrochemical performance and safety performance of the secondary battery. The low conductivity of the electrode mixture may affect the SEI film in several ways: (1) Uneven formation of the SEI film: Poor conductivity may lead to uneven current distribution during initial several charge-discharge cycles, causing uneven formation of the SEI film and resulting in thicker or thinner SEI films in some regions; (2) SEI film stability issues: The SEI film formed on silicon-carbon composite particles with poor conductivity may be unstable, potentially leading to continuous decomposition of the electrolyte and continuous formation of the SEI film during the charge-discharge cycles; and (3) Compatibility with the electrolyte: The quality of the SEI film formed on silicon-carbon composite particles may also be affected by the electrolyte components. The surface of the silicon-carbon composite particles with poor conductivity is prone to forming SEI films with poor conductivity, so further decomposition of the electrolyte cannot be effectively prevented, leading to continuous consumption of the electrolyte and possible gas generation. In this application, the "electrode mixture" refers to powder of the negative electrode material layer.

The negative electrode material layer of this application includes a negative electrode active material, a binder, and a conductive agent. The negative electrode active material includes a carbon material and silicon-carbon composite particles. With an appropriate increase in the temperature for the carbon coating treatment during the preparation of silicon-carbon composite particles, the quality of the carbon coating layer of the silicon-carbon composite particles is improved, and the integral area ratio I_{D}/I_{G} of peak D and peak G in the Raman spectrum of the carbon coating layer is made appropriate to increase the degree of graphitization of the carbon coating layer. A highly graphitized carbon coating layer has good flexibility and conductivity, so that the powder conductivity of the silicon-carbon composite particles is high, and the conductivity of the electrode mixture is high, further improving the quality of the SEI film. The electrode mixture with excessively low conductivity, for example, lower than 8 S/m, is prone to increasing the polarization of the secondary battery, causing uneven surface charge during the formation of the SEI film, and more ion conductors need to be generated to maintain the ionic conductivity of the SEI film, resulting in uneven formation of the SEI film, instability of the SEI film, and continuous consumption of the electrolyte. In the over-discharge process, the SEI film is more prone to degradation and gas generation, while the electrolyte generates gas due to consumption, resulting in poor safety performance of the secondary battery. With the mass percentages of silicon element and carbon element in the negative electrode material layer being within the ranges in this application, the conductivity of the electrode mixture is high. This can promote more uniform formation of the SEI film, improve the stability of the SEI film, and prevent continuous consumption of the electrolyte, so that the generation of organic substances in the SEI film, such as lithium carbonate, lithium carbonate, and proton electrolytes, is further reduced, and the gas generation from degradation of the foregoing organic substances and from consumption of the electrolyte is further reduced, thereby reducing the thickness swelling rate during over-discharge in the cycling process of the secondary battery and improving the safety performance of the secondary battery. Moreover, the high conductivity of the electrode mixture may promote the increase of the proportion of inorganic components in the SEI film to make the inorganic components more resistant to over-discharge, thereby reducing the gas generation voltage during over-discharge in the cycling process of the secondary battery and improving the safety performance of the secondary battery.

In an embodiment of this application, the secondary battery is charged at a constant current of 1C to 4.5 V and discharged at a constant current of 0.5C to 3.0 V for 300 cycles, then discharged at 0.01C to 3.0 V, discharged at 10 mA to 1.0 V, and further discharged at 5 mA to 1.0 V, and a thickness swelling rate TSR of the secondary battery is less than 15%. For example, TSR may be less than 15%, 14%, 13%, 12%, 11%, 10%, 9%, 8%, 7%, 6%, 5%, 4%, 3%, 2%, or 1%. The thickness swelling rate of the secondary battery after over-discharge is small, and the secondary battery has good safety performance.

In an embodiment of this application, the silicon-carbon composite particle includes a carbon carrier, elemental silicon, and a carbon coating layer, and average thickness H1 of the carbon coating layer is 2.5 nm to 12 nm. For example, H1 may be 2.5 nm, 3 nm, 4 nm, 5 nm, 6 nm, 7 nm, 8 nm, 9 nm, 10 nm, 11 nm, 12 nm, or a range defined by any two of the foregoing values. The silicon-carbon composite particle includes a carbon carrier, elemental silicon, and a carbon coating layer. With the average thickness of the carbon coating layer being regulated within the range in this application, the carbon coating layer with an appropriate average thickness can effectively reduce the contact between the silicon-lithium alloy and the electrolyte, so that the generation of organic substances in the SEI film, such as lithium carbonate, lithium carbonate, and proton electrolytes, is reduced, and the gas generation from degradation of the foregoing organic substances and from consumption of the electrolyte is further reduced, thereby further reducing the thickness swelling rate during over-discharge in the cycling process of the secondary battery and further improving the safety performance of the secondary battery. In addition, this makes the silicon-carbon composite particles have an appropriate mass percentage of carbon element, thereby making silicon element have an appropriate mass percentage, so that the silicon-carbon composite particles have a high specific capacity.

In an embodiment of this application, the carbon material includes at least one selected from the group consisting of graphite, hard carbon, and soft carbon, based on a mass of the silicon-carbon composite particles and the carbon material, mass percentage W4 of the silicon-carbon composite particles is 5% to 30%. For example, W4 may be 5%, 7%, 9%, 10%, 13%, 15%, 17%, 19%, 20%, 23%, 25%, 27%, 29%, 30%, or a range defined by any two of the foregoing values. Mass percentage W5 of the carbon material is 70% to 95%. For example, W5 may be 70%, 73%, 75%, 77%, 79%, 80%, 83%, 85%, 87%, 89%, 90%, 93%, 95%, or a range defined by any two of the foregoing values. The graphite includes at least one selected from the group consisting of natural graphite and artificial graphite. The carbon material includes the foregoing substances. With the mass percentage of the silicon-carbon composite particles and the mass percentage of the carbon material being regulated within the ranges in this application, the mass percentage of the silicon-carbon composite particles matches the mass percentage of the carbon material. The carbon material can utilize its high surface stability to protect the interface of the silicon-carbon composite particles. The contact between the surface of the carbon material and the surface of the silicon-carbon composite particles can reduce the contact area between the silicon-carbon composite particles and the electrolyte, thereby reducing the possibility of excessive SEI film formation on the surface of the silicon-carbon composite particles, further reducing the gas generation from degradation of the organic substances in the SEI film, and thus further reducing the thickness swelling rate during over-discharge in the cycling process of the secondary battery and further improving the safety performance of the secondary battery. Moreover, the good contact between the carbon material and the silicon-carbon composite particles can promote the increase of the proportion of inorganic components in the SEI film to make the inorganic components more resistant to over-discharge, thereby reducing the gas generation voltage during over-discharge in the cycling process of the secondary battery and further improving the safety performance of the secondary battery.

In an embodiment of this application, the particle size Dᵥ50 of the silicon-carbon composite particles is 5 µm to 12 µm. For example, Dᵥ50 may be 5 µm, 6 µm, 7 µm, 8 µm, 9 µm, 10 µm, 11 µm, 12 µm, or a range defined by any two of the foregoing values. With the particle size Dᵥ50 of the silicon-carbon composite particles being regulated within the ranges in this application, the silicon-carbon composite particles are mixed with the carbon material in the mixing and coating process, achieving a more reasonable spatial distribution. This effectively achieves face-to-face contact protection of the silicon-carbon composite particles by the carbon material, further reducing the contact between the carbon coating layer of the silicon-carbon composite particles and the electrolyte, thereby reducing the possibility of excessive SEI film formation on the surface of the silicon-carbon composite particles, further reducing the gas generation from degradation of the organic substances in the SEI film, and thus further reducing the thickness swelling rate during over-discharge in the cycling process of the secondary battery and further improving the safety performance of the secondary battery.

In this application, Dᵥ50 represents a particle size of a material at a cumulative volume of 50% in a volume-based particle size distribution as measured by starting from small particle sizes.

In an embodiment of this application, the binder includes at least one selected from the group consisting of lithium polyacrylate, carboxymethyl cellulose, and polyacrylic acid, and based on the mass of the negative electrode material layer, a mass percentage of the binder is 0.4% to 2.5%. For example, W6 may be 0.4%, 0.6%, 0.8%, 1%, 1.2%, 1.4%, 1.6%, 1.8%, 2%, 2.2%, 2.4%, 2.5%, or a range defined by any two of the foregoing values. The binder has high resistance. With the type and percentage of the binder within the ranges in this application, the binder has an appropriate mass percentage, the electrode mixture has high conductivity, so that the polarization of the secondary battery can be reduced, promoting a more uniform surface potential distribution during SEI film formation, further reducing the generation and concentrated distribution of organic substances in the SEI film such as lithium carbonate, lithium carbonate, and proton electrolytes. This makes the thickness of the SEI film moderate and uniform and improves the stability of the SEI film, further reducing the gas generation from degradation of the organic substances in the SEI film, and thus further reducing the thickness swelling rate during over-discharge in the cycling process of the secondary battery and further improving the safety performance of the secondary battery. In addition, this makes the adhesive force of the negative electrode plate relatively high so that the active substances are not easy to fall off from each other, reducing the possibility of electron path disconnection, and stable SEI film and electrode structure are conducive to the continuous distribution and homogeneous distribution of the SEI film, reducing the possibility of generation and agglomeration of a large amount of organic components, reducing the gas generation of the secondary battery during over-discharge, and further improving the safety performance of the secondary battery.

In an embodiment of this application, the conductive agent includes at least one of carbon nanotubes, conductive carbon black, carbon fiber, flake graphite, graphene, or conductive polymers, and based on the mass of the negative electrode material layer, a mass percentage of the conductive agent is 0.1% to 0.5%. For example, W7 may be 0.1%, 0.2%, 0.3%, 0.4%, 0.5%, or a range defined by any two of the foregoing values. The carbon nanotubes include single-walled carbon nanotubes and/or multi-walled carbon nanotubes. The conductive carbon black includes at least one of Super P, acetylene black, or Ketjen black. The carbon fiber may include but is not limited to vapor grown carbon fiber (VGCF) and/or carbon nanofiber. The conductive polymers may include but are not limited to at least one of polyphenylene derivative, polyaniline, polythiophene, polyacetylene, or polypyrrole. With the type and percentage of the conductive agent being regulated within the ranges in this application, the conductive agent has an appropriate mass percentage. The addition of the conductive agent can reduce interface impedance, improve the conductivity of the electrode mixture, and improve the stability of the SEI film, further reducing the gas generation from degradation of the organic substances in the SEI film, and thus further reducing the thickness swelling rate during over-discharge in the cycling process of the secondary battery and further improving the safety performance of the secondary battery. In addition, this makes the secondary battery have a high energy density.

In an embodiment of this application, the binder includes lithium polyacrylate, and a characteristic peak appears at 1550 cm⁻¹ to 1560 cm⁻¹ in an infrared spectrum of powder of the negative electrode material layer. The characteristic peak at 1550 cm⁻¹ to 1560 cm⁻¹ is a characteristic peak of lithium carboxylate. The binder is selected from the foregoing substances, and the infrared spectrum of powder of the negative electrode material layer meets the foregoing characteristics. The binder includes carboxyl groups -COOH and -COOLi. The carboxyl groups can be connected to the hydroxyl functional groups on the surface of the silicon-carbon composite particles through hydrogen bonds, promoting the formation of the SEI film on the surface of the silicon-carbon composite particles, thereby improving the stability of the SEI film on the surface of the silicon-carbon composite particles, further reducing the gas generation from degradation of the organic substances in the SEI film, and thus further reducing the thickness swelling rate during over-discharge in the cycling process of the secondary battery and further improving the safety performance of the secondary battery.

In an embodiment of this application, the binder includes lithium polyacrylate, and after the secondary battery is discharged to 3.0 V, based on the mass of the negative electrode material layer, mass percentage W8 of lithium element is 0.2% to 3%. For example, W8 may be 0.2%, 0.4%, 0.6%, 0.8%, 1%, 1.2%, 1.4%, 1.6%, 1.8%, 2%, 2.2%, 2.4%, 2.6%, 2.8%, 3%, or a range defined by any two of the foregoing values. The binder includes lithium polyacrylate, and after the secondary battery is discharged to 3.0 V, the mass percentage of lithium element in the negative electrode material layer may reflect a mass percentage of the binder in the negative electrode material layer to some extent. The binder is selected from the foregoing substances. After the secondary battery is discharged to 3.0 V, the mass percentage of lithium element in the negative electrode material layer is within the range in this application, and the type and percentage of the binder are within the ranges in this application. The binder includes carboxyl groups -COOH and -COOLi. The carboxyl groups can be connected to the hydroxyl functional groups on the surface of the silicon-carbon composite particles through hydrogen bonds, promoting the formation of the SEI film on the surface of the silicon-carbon composite particles, thereby improving the stability of the SEI film on the surface of the silicon-carbon composite particles, further reducing the gas generation from degradation of the organic substances in the SEI film, and thus further reducing the thickness swelling rate during over-discharge in the cycling process of the secondary battery and further improving the safety performance of the secondary battery. In addition, the carboxyl group -COOLi can effectively improve the ionic conductivity of the SEI film, induce the nucleation growth of inorganic lithium salts, and increase the proportion of inorganic components in the SEI film, further improving the safety performance of the secondary battery.

In an embodiment of this application, the conductive agent includes carbon nanotubes, where diameter D of the carbon nanotubes is 2 nm to 6 nm, preferably, 3 nm to 5 nm. For example, D may be 2 nm, 3 nm, 4 nm, 5 nm, 6 nm, or a range defined by any two of the foregoing values. Length L of the carbon nanotubes is 3,000 nm to 60,000 nm, preferably, 8,000 nm to 20,000 nm. For example, L may be 3,000 nm, 4,000 nm, 5,000 nm, 6,000 nm, 7,000 nm, 8,000 nm, 9,000 nm, 10,000 nm, 15,000 nm, 20,000 nm, 25,000 nm, 30,000 nm, 35,000 nm, 40,000 nm, 45,000 nm, 50,000 nm, 55,000 nm, 60,000 nm, or a range defined by any two of the foregoing values. The conductive agent includes carbon nanotubes. With the diameter and length of the carbon nanotubes being regulated within the ranges in this application, it helps to connect an electron pathway network of various active materials, improve the migration speed of electrons in the negative electrode plate, reduce electron scattering and obstruction, and improve the conductivity of the electrode mixture, thereby improving the quality of the SEI film, further reducing the gas generation from degradation of the organic substances in the SEI film, and thus further reducing the thickness swelling rate during over-discharge in the cycling process of the secondary battery and further improving the safety performance of the secondary battery. In addition, this can reduce the internal resistance of the secondary battery.

In an embodiment of this application, compacted density PD of the negative electrode material layer is 1.4 g/cc to 1.5 g/cc at a 50% state of charge of the secondary battery. For example, PD may be 1.4 g/cc, 1.42 g/cc, 1.44 g/cc, 1.46 g/cc, 1.48 g/cc, 1.5 g/cc, or a range defined by any two of the foregoing values. In regulating the compacted density of the negative electrode material layer of the secondary battery at a 50% state of charge, the volumetric energy density of the secondary battery, the electrolyte infiltration, and the contact area among the silicon-carbon composite particles, carbon material, binder, and conductive agent are comprehensively considered. The "50% state of charge" refers to the half-charged state. When the secondary battery is at a 50% state of charge, and the compacted density of the negative electrode material layer is within the range in this application, the volumetric energy density of the secondary battery is high, and the contact among the silicon-carbon composite particles, the carbon material, the binders, and the conductive agent is tight, so that the electron transport path is relatively short, the electronic conductivity of the electrode mixture is high, and an appropriate amount of SEI film is formed on the surface of the electrode mixture, allowing to reduce the gas generation from degradation of organic substances in the SEI film, reduce the thickness swelling rate during over-discharge in the cycling process of the secondary battery, and improve the safety performance of the secondary battery. In addition, the electrolyte has good infiltration and this is conducive to the extractable capacity of the negative electrode active material.

In an embodiment of this application, the electrolyte includes a first compound, the first compound includes at least one selected from the group consisting of fluoroethylene carbonate, difluoroethylene carbonate, 1,3-propane sultone, and ethylene sulfate, and based on a mass of the electrolyte, mass percentage W9 of the first compound is 3% to 8%. For example, W9 may be 3%, 3.5%, 4%, 4.5%, 5%, 5.5%, 6%, 6.5%, 7%, 7.5%, 8%, or a range defined by any two of the foregoing values. With the type and percentage of the first compound in the electrolyte being regulated within the ranges in this application, the reduction potential of the fluorine-containing or sulfur-containing first compound is high, and inorganic components such as lithium fluoride or lithium sulfate that are difficult to decompose and generate gas may be formed preferentially over solvent (for example, carbonate compounds) reduction. These inorganic components are distributed on the surface of the carbon coating layer of the silicon-carbon composite particles, so that the proportion of substances in the SEI film that are difficult to decompose and generate gas can be increased to stabilize the structure of the SEI film, thereby further reducing the thickness swelling rate during over-discharge in the cycling process of the secondary battery and further improving the safety performance of the secondary battery.

The method for regulating the mass percentage of silicon element and the mass percentage of carbon element in the negative electrode material layer is not particularly limited in this application, provided that the objectives of this application can be achieved. For example, the mass percentage of silicon element and the mass percentage of carbon element in the negative electrode material layer may be regulated by regulating the mass percentage of the carbon material added and the mass percentage of silicon-carbon composite particles added.

The method for regulating the average thickness of the carbon coating layer is not particularly limited in this application, provided that the objectives of this application can be achieved. For example, the average thickness of the carbon coating layer may be regulated by regulating the time or temperature for the carbon coating treatment during the preparation of silicon-carbon composite particles. For example, when a gas phase method is used for the carbon coating treatment, if other conditions remain unchanged, the average thickness of the carbon coating layer increases when the time for the carbon coating treatment is extended; or the average thickness of the carbon coating layer decreases when the time for the carbon coating treatment is shortened. For example, when a gas phase method is used for the carbon coating treatment, if other conditions remain unchanged, the average thickness of the carbon coating layer increases when the temperature for the carbon coating treatment is increased; or the average thickness of the carbon coating layer decreases when the temperature for the carbon coating treatment is reduced.

The method for regulating the mass percentage of silicon-carbon composite particles and the mass percentage of the carbon material are not particularly limited in this application, provided that the objectives of this application can be achieved. For example, the mass percentage of silicon-carbon composite particles and the mass percentage of the carbon material may be regulated by regulating the mass percentage of silicon-carbon composite particles added and the mass percentage of the carbon material added.

The method for regulating the particle size Dᵥ50 of the silicon-carbon composite particles is not particularly limited in this application, provided that the objectives of this application can be achieved. For example, the particle size Dᵥ50 of the silicon-carbon composite particles may be regulated by grinding the silicon-carbon composite particles. For example, if other conditions remain unchanged, Dᵥ50 of the silicon-carbon composite particles decreases when the grinding time is extended; or Dᵥ50 of the silicon-carbon composite particles increases when the grinding time is shortened.

The method for regulating the mass percentage of the binder and the mass percentage of the conductive agent is not particularly limited in this application, provided that the objectives of this application can be achieved. For example, the mass percentage of the binder and the mass percentage of the conductive agent may be regulated by regulating the mass percentage of the binder added and the mass percentage of the conductive agent added.

Materials with different tube lengths in this application are commercially available, lengths of the carbon nanotubes may be measured in conjunction with the test method in "test for length of carbon nanotubes" provided in this application, and the carbon nanotubes with a required length can be selected. Materials with different diameters and tube lengths in this application are commercially available.

In this application, the compacted density of the negative electrode material layer of the secondary battery at a 50% state of charge may be regulated by means known to persons skilled in the art. For example, the compacted density of the negative electrode material layer after cold pressing may be regulated by regulating the cold pressing pressure during cold pressing of the negative electrode plate, thereby regulating the compacted density of the negative electrode material layer of the secondary battery at a 50% state of charge. For example, if other conditions remain unchanged, when the cold pressing pressure is increased, the compacted density of the negative electrode material layer after cold pressing increases, and the compacted density of the negative electrode material layer of the secondary battery at a 50% state of charge increases; or when the cold pressing pressure is decreased, the compacted density of the negative electrode material layer after cold pressing decreases, and the compacted density of the negative electrode material layer of the secondary battery at a 50% state of charge decreases.

The negative electrode current collector is not particularly limited in this application, provided that the objectives of this application can be achieved. For example, the negative electrode current collector may include copper foil, copper alloy foil, nickel foil, stainless steel foil, titanium foil, foam nickel, foam copper, a composite current collector (for example, a lithium-copper composite current collector, a carbon-copper composite current collector, a nickel-copper composite current collector, or a titanium-copper composite current collector), or the like.

The thickness of the negative electrode current collector is not particularly limited in this application, provided that the objectives of this application can be achieved. For example, the thickness of the negative electrode current collector is 4 µm to 12 µm. The thickness of the negative electrode material layer is not particularly limited in this application, provided that the objectives of this application can be achieved. For example, the thickness of the negative electrode material layer on a single side is 30 µm to 250 µm.

Optionally, the negative electrode plate may further include a conductive layer, and the conductive layer is sandwiched between the negative electrode current collector and the negative electrode material layer. The composition of the conductive layer is not particularly limited in this application, and the conductive layer may be a conductive layer commonly used in the art. The conductive layer includes a conductive agent and a binder. The conductive agent and the binder in the conductive layer are not particularly limited in this application, and may be at least one of the foregoing conductive agents or the foregoing binders. The mass ratio of the conductive agent to the binder in the conductive layer is not particularly limited in this application, and persons skilled in the art can make selection based on actual needs, provided that the objectives of this application can be achieved.

In this application, the electrolyte includes a lithium salt. The type of lithium salt is not particularly limited in this application, and any known lithium salts in the art may be used. For example, the lithium salt may include but is not limited to at least one of lithium hexafluorophosphate (LiPF₆), lithium bis(trifluoromethanesulfonyl)imide (LiN(CF₃SO₂)₂, LiTFSI), lithium bis(fluorosulfonyl)imide (Li(N(SO₂F)₂), LiFSI), lithium difluorophosphate (LiPO₂F₂), lithium bis(oxalato)borate (LiB(C₂O₄)₂, LiBOB), or lithium difluoro(oxalato)borate (LiBF₂(C₂O₄), LiDFOB). The electrolyte also includes a non-aqueous organic solvent. The non-aqueous organic solvent is not particularly limited in this application, provided that the objectives of this application can be achieved. For example, the non-aqueous organic solvent may include at least one of a carbonate compound, a carboxylate compound, an ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include but is not limited to at least one of ethylene carbonate (EC), propylene carbonate (PC), butylene carbonate (BC), or vinyl ethylene carbonate (VEC). The fluorocarbonate compound may include but is not limited to at least one of 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, or propyl propionate. The ether compound may include but is not limited to at least one of dibutyl ether, tetraethylene glycol dimethyl ether, diglyme, 1,2-dimethoxyethane, 1,2-diethoxyethane, ethoxymethoxy ethane, 2-methyltetrahydrofuran, or tetrahydrofuran. The another organic solvent may include but is not limited to at least one of dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, or phosphate ester. The mass percentages of the lithium salt and the non-aqueous organic solvent in the electrolyte are not particularly limited in this application, provided that the objectives of this application can be achieved. For example, based on the mass of the electrolyte, a mass percentage of the lithium salt is 8% to 15%, and a mass percentage of the non-aqueous organic solvent is 77% to 89%.

In this application, the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one or two surfaces of the positive electrode current collector in its thickness direction. It should be noted that the "surface" herein may be an entire region or a partial region of the positive electrode current collector. This is not particularly limited in this application, provided that the objectives of this application can be achieved. The positive electrode current collector is not particularly limited in this application, provided that the objectives of this application can be achieved. For example, the positive electrode current collector may include aluminum foil, aluminum alloy foil, a composite current collector (for example, an aluminum-carbon composite current collector), or the like.

The positive electrode material layer in this application includes a positive electrode active material, and the positive electrode active material includes a substance capable of reversibly intercalating and deintercalating active ions such as lithium ions. The positive electrode material layer may be a single-layer structure or a multiple-layer structure, and the multiple positive electrode active material layers may include the same or different positive electrode active materials with each other. The positive electrode active material is not particularly limited in this application, provided that the objectives of this application can be achieved. For example, the positive electrode active material may include but is not limited to at least one of lithium nickel cobalt manganate (for example, NCM811, NCM622, NCM523, NCM111), lithium nickel cobalt aluminum oxide, lithium iron phosphate, lithium-rich manganese-based materials, lithium cobalt oxide (LiCoO₂), lithium manganese oxide, lithium iron manganese phosphate, or lithium titanate. The positive electrode material layer of this application further includes a positive electrode conductive agent and a positive electrode binder. The positive electrode conductive agent and the positive electrode binder in the positive electrode material layer are not particularly limited in this application, provided that the objectives of this application can be achieved. For example, the positive electrode conductive agent may include at least one of the foregoing conductive agents. The positive electrode binder may include at least one of polyacrylate, polyimide, polyamide, polyamideimide, polyfluoroethylene, polystyrene butadiene copolymer (styrene-butadiene rubber), sodium alginate, polyvinyl alcohol, polytetrafluoroethylene, polyacrylonitrile, sodium carboxymethyl cellulose, potassium carboxymethyl cellulose, sodium hydroxymethyl cellulose, or potassium hydroxymethyl cellulose. The mass ratio of the positive electrode active material, positive electrode conductive agent, and positive electrode binder in the positive electrode material layer is not particularly limited in this application, and persons skilled in the art can choose according to actual needs, provided that the objectives of this application can be achieved.

The thickness of the positive electrode current collector is not particularly limited in this application, provided that the objectives of this application can be achieved. For example, the thickness of the positive electrode current collector is 6 µm to 12 µm. The thickness of the positive electrode material layer is not particularly limited in this application, provided that the objectives of this application can be achieved. For example, the thickness of the positive electrode material layer on a single side is 30 µm to 120 µm.

Optionally, the positive electrode plate may further include a conductive layer, and the conductive layer is located between the positive electrode current collector and the positive electrode material layer. The composition of the conductive layer is not particularly limited in this application, and the conductive layer may be a conductive layer commonly used in the art. The conductive layer includes a conductive agent and a binder. The conductive agent and the binder in the conductive layer are not particularly limited in this application, and may be at least one of the foregoing conductive agents or the foregoing binders. The mass ratio of the conductive agent to the binder in the conductive layer is not particularly limited in this application, and persons skilled in the art can make selection based on actual needs, provided that the objectives of this application can be achieved.

In this application, the separator is used to separate the positive electrode plate from the negative electrode plate, prevent internal short circuits in the secondary battery, and allow electrolyte ions to pass freely without affecting the electrochemical charge and discharge process. The separator is not particularly limited in this application, provided that the objectives of this application can be achieved. For example, the material of the separator may include but is not limited to at least one of polyolefins (PO) mainly composed of polyethylene (PE) or polypropylene (PP), polyester (for example, polyethylene terephthalate (PET) film), cellulose, polyimide (PI), polyamide (PA), spandex, or aramid. The type of the separator may include at least one of woven film, non-woven film, microporous film, composite film, calendered film, or spun film.

In this application, the separator may include a substrate and a surface treatment layer. The substrate may be a non-woven fabric or composite film of a porous structure. The substrate may be made of at least one of polyethylene, polypropylene, polyethylene terephthalate, or polyimide. Optionally, a polypropylene porous film, a polyethylene porous film, polypropylene non-woven fabric, a polyethylene non-woven fabric, or a polypropylene-polyethylene-polypropylene porous composite film may be used. Optionally, the surface treatment layer is provided on at least one surface of the substrate layer, and the surface treatment layer may be a polymer layer or an inorganic substance layer, or a layer formed by a mixture of a polymer and an inorganic substance. For example, the inorganic substance layer includes inorganic particles and a separator binder. The inorganic particle is not particularly limited in this application and, for example, may include at least one of aluminum oxide, silicon oxide, magnesium oxide, titanium oxide, hafnium dioxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The separator binder is not particularly limited in this application and, for example, may be at least one of the foregoing positive electrode binders. The polymer layer includes a polymer, and the polymer is made of at least one of polyamide, polyacrylonitrile, acrylate polymer, polyacrylic acid, polyvinylpyrrolidone, polyvinyl ether, polyvinylidene fluoride, or poly(vinylidene fluoride-hexafluoropropylene). The thickness of the separator is not particularly limited in this application, provided that the objectives of this application can be achieved. For example, the thickness of the separator may be 5 µm to 20 µm.

The secondary battery in this application further includes a packaging bag for accommodating the positive electrode plate, the separator, the negative electrode plate, the electrolyte, and other known components of the secondary battery in the art. The other components are not limited in this application. The packaging bag is not particularly limited in this application and may be any well-known packaging bag in the art, provided that the objectives of this application can be achieved. For example, an aluminum-plastic film packaging bag may be used.

The type of the secondary battery is not particularly limited in this application, and the secondary battery may include any apparatus in which electrochemical reactions take place. In this application, the secondary battery may include but is not limited to a lithium metal secondary battery, a lithium-ion secondary battery (a lithium-ion battery), a lithium polymer secondary battery, or a lithium-ion polymer secondary battery (lithium-ion polymer battery).

A second aspect of this application provides a preparation method of the secondary battery according to any one of the foregoing embodiments, including the following steps: preparing the positive electrode plate, the negative electrode plate, the electrolyte, and the separator, and obtaining the secondary battery by assembling.

A preparation method of the silicon-carbon composite particles in the negative electrode plate includes the following steps:
(1) heating a carbon carrier in an inert atmosphere at a heating rate v of 5°C/min to 20°C/min to a temperature T1 of 400°C to 480°C, maintaining the temperature for a period of time t1 between 10 min and 60 min, and then conducting deposition in a silane gas mixture to obtain an intermediate; where a deposition time t2 is 2 h to 30 h; and the silane gas mixture is composed of silane and inert gas, and based on a mass of the silane gas mixture, a mass percentage W10 of silane is 10% to 50%, and a mass percentage W11 of inert gas is 50% to 90%; and
(2) performing carbon coating treatment on the intermediate to obtain the silicon-carbon composite particles; where a method for the carbon coating treatment includes one of a liquid phase method, a gas phase method, or a gas-liquid coupling method; a carbon source includes at least one of coal tar pitch, petroleum pitch, acetylene, propylene, natural gas, ethylene, or cyclohexane; a temperature T2 for the carbon coating treatment is 620°C to 810°C; and a period of time t3 for the carbon coating treatment is 1 h to 6 h.

For example, v may be 5°C/min, 7°C/min, 9°C/min, 10°C/min, 13°C/min, 15°C/min, 17°C/min, 19°C/min, 20°C/min, or a range defined by any two of the foregoing values. T1 may be 400°C, 410°C, 420°C, 430°C, 440°C, 450°C, 460°C, 470°C, 480°C, or a range defined by any two of the foregoing values. t1 may be 10 min, 20 min, 30 min, 40 min, 50 min, 60 min, or a range defined by any two of the foregoing values. t2 may be 2 h, 4 h, 6 h, 8 h, 10 h, 12 h, 14 h, 16 h, 18 h, 20 h, 22 h, 24 h, 26 h, 28 h, 30 h, or a range defined by any two of the foregoing values. W10 may be 10%, 15%, 20%, 25%, 30%, 35%, 40%, 45%, 50%, or a range defined by any two of the foregoing values. W11 may be 50%, 55%, 60%, 65%, 70%, 75%, 80%, 85%, 90%, or a range defined by any two of the foregoing values. T2 may be 620°C, 630°C, 640°C, 650°C, 660°C, 670°C, 680°C, 690°C, 700°C, 710°C, 720°C, 730°C, 740°C, 750°C, 760°C, 770°C, 780°C, 790°C, 800°C, 810°C, or a range defined by any two of the foregoing values. t3 may be 1 h, 2 h, 3 h, 4 h, 5 h, 6 h, or a range defined by any two of the foregoing values.

The carbon carrier is not particularly limited in this application, provided that the objectives of this application can be achieved. For example, the carbon carrier may include at least one of microporous carbon skeleton, mesoporous carbon skeleton, micro-mesoporous composite carbon skeleton, or hierarchical porous carbon skeleton. The inert atmosphere is not particularly limited in this application, provided that the objectives of this application can be achieved. For example, the inert atmosphere may include argon atmosphere or nitrogen atmosphere. The inert gas is not particularly limited in this application, provided that the objectives of this application can be achieved. For example, the inert gas may include argon or nitrogen.

In an embodiment of this application, the method for the carbon coating treatment includes the liquid phase method, including the following steps: placing the intermediate in an organic solvent containing a carbon source to obtain an organic solution, evaporating the organic solution, and performing the carbon coating treatment in the inert atmosphere to obtain the silicon-carbon composite particles; where the carbon source includes at least one of petroleum pitch or coal tar pitch, the organic solvent includes at least one of tetrahydrofuran, n-hexane, or xylene; the temperature T2 for the carbon coating treatment is 700°C to 810°C, preferably, T2 is 720°C to 810°C; and the period of time t3 for the carbon coating treatment is 1 h to 2 h.

In an embodiment of this application, the method for the carbon coating treatment includes a gas phase method, including the following step: performing the carbon coating treatment on the intermediate in a reducing atmosphere to obtain the silicon-carbon composite particles; where the reducing atmosphere includes at least one of acetylene, propylene, natural gas, ethylene, or cyclohexane; the temperature T2 for the carbon coating treatment is 620°C to 700°C; and the period of time t3 for the carbon coating treatment is 2 h to 6 h.

In this application, the gas-liquid coupling method refers to first pre-coating with a gas phase method, then transitioning to a liquid phase system for liquid phase coating, including the following steps: performing the carbon pre-coating treatment on the intermediate in a reducing atmosphere; where the reducing atmosphere includes at least one of acetylene, propylene, natural gas, ethylene, or cyclohexane; a temperature for the carbon pre-coating treatment is 500°C to 600°C; and a time for the carbon pre-coating treatment is 1 h to 3 h; then placing the carbon pre-coated intermediate in an organic solvent containing a carbon source to obtain an organic solution, evaporating the organic solution, and performing carbon coating treatment in an inert atmosphere to obtain silicon-carbon composite particles; where the carbon source includes at least one of petroleum pitch or coal tar pitch; the organic solvent includes at least one of tetrahydrofuran, n-hexane, or xylene; the temperature T2 for the carbon coating treatment is 700°C to 810°C; and a period of time t3 for the carbon coating treatment is 1 h to 2 h.

With the foregoing method to prepare silicon-carbon composite particles, the high temperature for the carbon coating treatment can improve the quality of the carbon coating layer of the silicon-carbon composite particles and increase the degree of graphitization of the carbon coating layer, making the silicon-carbon composite particles have a high powder conductivity. In this way, the conductivity of the electrode mixture is improved and the quality of the SEI film is further improved, so that the generation of organic substances in the SEI film, such as lithium carbonate, lithium carbonate, and proton electrolytes, can be reduced, and the gas generation from degradation of the foregoing organic substances and from consumption of the electrolyte is reduced, thereby reducing the thickness swelling rate during over-discharge in the cycling process of the secondary battery and improving the safety performance of the secondary battery. Moreover, the high conductivity of the electrode mixture may promote the increase of the proportion of inorganic components in the SEI film to make the inorganic components more resistant to over-discharge, thereby reducing the gas generation voltage during over-discharge in the cycling process of the secondary battery and improving the safety performance of the secondary battery.

The assembly method of the positive electrode plate, negative electrode plate, electrolyte, and separator is not particularly limited in this application, and the assembly may be carried out using any method known to persons skilled in the art. For example, the assembly may include but is not limited to the following steps: stacking a positive electrode plate, a separator, and a negative electrode plate in sequence, performing operations such as winding and folding on the stack as needed to obtain an electrode assembly with a wound structure, placing the electrode assembly into a packaging bag, injecting an electrolyte into the packaging bag and sealing the packaging bag to obtain a secondary battery; or stacking a positive electrode plate, a separator, and a negative electrode plate in sequence, fixing four corners of an entire stacked structure with adhesive tape to obtain an electrode assembly with a stacked structure, placing the electrode assembly into a packaging bag, injecting an electrolyte into the packaging bag and sealing the packaging bag to obtain a secondary battery. In addition, an over-current protection element, a guide plate, and the like may be placed as required in the packaging bag to prevent pressure increase, over-charge, and over-discharge in the secondary battery.

A third aspect of this application provides an electronic apparatus including the secondary battery according to any one of the foregoing embodiments or a secondary battery prepared by using the preparation method according to any one of the foregoing embodiments. Therefore, the electronic apparatus provided in this application has good safety performance.

The type of the electronic apparatus is not particularly limited in this application and the electronic apparatus may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

### Examples

In the following, examples and comparative examples are given to describe some embodiments of this application in more detail. Various tests and evaluations are performed in the following methods. In addition, unless otherwise specified, "part" and "%" are measured by mass.

### Test methods and devices

### Test for mass percentage of elements

A lithium-ion battery was discharged at a constant current of 0.1C to 3.0 V and disassembled to obtain a negative electrode plate. The negative electrode plate was cleaned with dimethyl carbonate (DMC) for 10 min, and then the negative electrode plate was baked at 100°C for 2 h for later use. The negative electrode material layer on the negative electrode plate was scraped, and powder of the negative electrode material layer was collected. An inductively coupled plasma spectrometer (ICP, model Agilent 5800, provided by Agilent) was used to test percentages of silicon and lithium elements in the powder of the negative electrode material layer. A high-frequency carbon-sulfur analyzer (model DK-606) was used to test a percentage of carbon element in the powder of the negative electrode material layer.

### Test for powder conductivity of negative electrode material layer

A lithium-ion battery was discharged at a constant current of 0.1C to 3.0 V and disassembled to obtain a negative electrode plate. The negative electrode plate was cleaned with dimethyl carbonate (DMC) for 10 min, and then the negative electrode plate was baked at 100°C for 2 h for later use. The negative electrode material layer on the negative electrode plate was scraped, and powder of the negative electrode material layer was collected.

A resistivity tester and an electronic pressure testing machine were used to carry out a test for the powder conductivity of the negative electrode material layer. The correction factor F of the resistivity tester was set to 1, and the powder conductivity test mold was placed on the table of the electronic pressure testing machine, with the pressure increased to 1000 kg and then the displacement and deformation reset to zero. 0.5 g of the powder of the negative electrode material layer was added into the test mold, followed by vibration for 10 seconds, and then an upper gasket was added. The test mold was placed on the table of the electronic pressure testing machine and connected to the resistivity tester. The pressure of the electronic pressure testing machine was increased to 6 MPa, maintained for 60 seconds, then released to zero. The sample deformation height and the value of the resistivity tester (as the sample resistance) were read.

The conductivity was calculated according to the following formula: σ = h/(S×R),
where σ is the powder conductivity of the negative electrode material layer, in S/m; h is the sample deformation height, in cm; S is the sample bottom area, which is 3.14 cm²; and R is the resistance of the sample, in Ω.

### Test for thickness swelling rate of secondary battery after over-discharge

At 25°C, a prepared lithium-ion battery was charged at a constant current of 0.1C to 4.5 V, then charged at constant voltage until the current was 0.05C, then left standing for 5 min, and a charge specific capacity at this point was recorded as the first-cycle charge specific capacity; then the lithium-ion battery was discharged at a constant current of 0.1C to 3.0 V, then left standing for 5 min. The foregoing charge-discharge process was referred to as the first-cycle activation process. Then, the lithium-ion battery was charged at a constant current of 1C to 4.5 V and discharged at a constant current of 0.5C to 3.0 V for 300 cycles, and a thickness of the lithium-ion battery at this point was recorded as TH1; then the lithium-ion battery was discharged at 0.01C to 3.0 V, discharged at 10 mA to 1.0 V, and further discharged at 5 mA to 1.0 V for over-discharge, and a thickness of the lithium-ion battery at this point was recorded as TH2. Positions were sampled for thickness measurement every 30 seconds during this period. A voltage obtained when a sudden change of the thickness of the lithium-ion battery occurred was recorded as a gas generation voltage during over-discharge, and the thickness swelling rate TSR of the lithium-ion battery after over-discharge was calculated according to the following formula. The voltage and thickness of the lithium-ion battery in the over-discharge process and the time of the over-discharge process were recorded, and the curves of voltage and thickness of the lithium-ion battery over time were plotted. Thickness swelling rate TSR of lithium-ion battery after over-discharge = (TH2/TH1) -1 × 100%.

### Test for average thickness of carbon coating layer

Silicon-carbon composite particles were sliced using focused ion beam (FIB), and then observed with a high-resolution transmission electron microscope (HRTEM, model Talos F200X). Five regions were randomly selected for recording the thickness of the carbon coating layer, and an average thickness of the carbon coating layer was obtained by calculating an arithmetic mean.

### Test for mass percentage of silicon-carbon composite particles and mass percentage of carbon material

A lithium-ion battery was discharged at a constant current of 0.1C to 3.0 V and disassembled to obtain a negative electrode plate. The negative electrode plate was soaked in dimethyl carbonate (DMC) for 10 min, and then the negative electrode plate was baked at 100°C for 2 h for later use. The negative electrode material layer on the negative electrode plate was scraped, and powder of the negative electrode material layer were collected. Then the powder of the negative electrode material layer was washed with 1M hydrochloric acid (HCl), and finally washed and filtered with deionized water. After drying, the powder of the negative electrode material layer was collected.

The mass percentage of silicon-carbon composite particles and the mass percentage of the carbon material were determined using alkali etching, high-temperature oxidation, and thermogravimetric analysis. In a crucible, 0.5 g of the powder of the negative electrode material layer and 1.5 g of sodium hydroxide were added, heated to 300°C, and then cooled to below 100°C; and the reactants were put into deionized water at 80°C, washed, filtered, dried, and weighed. A mass loss is a mass of silicon, and a mass loss ratio of silicon is the mass of silicon divided by 0.5 g. Then thermogravimetric analysis was performed on the dried powder in an air atmosphere (model: STA499C). The sample showed a mass loss before 700°C, and this was a mass loss of carbon in the silicon-carbon composite particles. The mass loss ratio of silicon plus the mass loss ratio from 300°C to 700°C was the mass percentage of the silicon-carbon composite particles. The sample was further heated to 1200°C. A second mass loss occurred between 700°C and 1200°C, and a mass loss ratio at this stage was the mass percentage of the carbon material.

### Test for particle size

0.02 g of silicon-carbon composite particles was added into a 50 mL clean beaker, with 20 mL of deionized water added, and was ultrasonically cleaned for 5 min using a 120W ultrasonic cleaner to fully disperse the silicon-carbon composite particles in deionized water to obtain a sample dispersion. the sample dispersion was tested with a particle size analyzer (model MasterSizer 2000) to obtain the particle size Dᵥ50 of the silicon-carbon composite particles.

### Infrared spectrum test

A lithium-ion battery was discharged at a constant current of 0.1C to 3.0 V and disassembled to obtain a negative electrode plate. The negative electrode plate was cleaned with dimethyl carbonate (DMC) for 10 min, and then the negative electrode plate was baked at 100°C for 2 h for later use. The negative electrode material layer on the negative electrode plate was scraped, and powder of the negative electrode material layer was collected.

An infrared spectrometer (model Nicolet iS50) was used to test the infrared spectrum of the powder of the negative electrode material layer using the potassium bromide (KBr) pellet method. 500 mg of KBr and 10 mg of the powder of the negative electrode material layer were ground in a mortar to obtain a mixed material. The mixed material was placed into a pressure mold and pressurized to 20 MPa for 10s before releasing to obtain a disc. The disc was taken out and tested for the infrared spectrum of the powder of the negative electrode material layer using an infrared spectrometer.

### Test for length of carbon nanotubes

The length of the carbon nanotubes was characterized and calculated using a scanning electron microscope (SEM).

### Test for compacted density at half-charged state

A lithium-ion battery was charged at a constant current of 0.1C to 4.5 V, then charged at constant voltage until the current was 0.05C, left standing for 5 min, then discharged at a constant current of 0.1C to 3.0 V, left standing for 5 min, and then charged at a constant current of 0.1C to 3.95 V to obtain a lithium-ion battery at half-charged state. The lithium-ion battery at half-charged state was disassembled in a drying room, and the negative electrode plate was taken out, washed with DMC, and then air dried. 10 small discs with an area of 1540.25 mm² were cut from the foregoing negative electrode plate using a cutting machine and weighed, with an average value M taken; then thicknesses of the small discs were measured using a micrometer, with an average value H taken. Then negative electrode material layers on the 10 small discs were wiped off and weighed, with an average value m taken; then thicknesses of the negative electrode current collectors were measured using a micrometer, with an average value h taken. Compacted density PD of negative electrode material layer = (M - m)/(2 × 1540.25)/[(H - h)/2].

### Example 1-1

### <Preparation of silicon-carbon composite particles>

100 g of the composite carbon skeleton (Dᵥ50 = 8.7 µm, Dᵥ99 = 18.9 µm) was heated at a heating rate v of 10°C/min in an argon atmosphere to a temperature T1 of 450°C and maintained at that temperature for a period of time t1 of 10 min, and then the atmosphere was switched to a silane gas mixture for deposition in the silane gas mixture to obtain an intermediate; where a deposition time t2 was 10 h; and the silane gas mixture was composed of silane and argon, and based on a mass of the silane gas mixture, a mass percentage W10 of silane was 20%, and a mass percentage W11 of argon was 80%.

Then the atmosphere was switched to a reducing atmosphere. The intermediate was subjected to carbon coating treatment at a temperature T2 of 700°C for a period of time t3 of 3 h, and then cooled to room temperature to obtain black silicon-carbon composite particles, where the reducing atmosphere was composed of propylene and argon, and based on a mass of the reducing atmosphere, a mass percentage of propylene was 20%, and a mass percentage of argon was 80%.

The silicon-carbon composite particle prepared included a composite carbon skeleton, elemental silicon, and a carbon coating layer, and average thickness H1 of the carbon coating layer was 4.4 nm, and the particle size Dᵥ50 of the silicon-carbon composite particles was 8.8 µm.

### <Preparation of negative electrode plate>

A negative electrode active material, binder lithium polyacrylate (PAALi), conductive agent single-walled carbon nanotubes were mixed at a mass ratio of 97.7:2:0.3, with deionized water added as a solvent, to prepare a negative electrode slurry with a solid content of 40wt%, and the slurry was stirred to uniformity under an action of a vacuum mixer to obtain a negative electrode slurry. The negative electrode slurry was evenly applied on one surface of a 12 µm thick negative electrode current collector copper foil, and the copper foil was dried at 85°C to obtain a negative electrode plate coated with a negative electrode material layer on one surface, with a coating weight of 10 mg/m² of the negative electrode material layer. Then the foregoing steps were repeated on another surface of the copper foil to obtain a negative electrode plate coated with negative electrode material layers on two surfaces. After cold pressing, cutting, slitting, and drying in vacuum at 120°C for 12 h, a negative electrode plate with dimensions of 78 mm × 875 mm was obtained for later use, where the compacted density of the negative electrode material layer after cold pressing was 1.7 g/cc, and the negative electrode active material included artificial graphite and the prepared silicon-carbon composite particles, with a mass ratio of 80:20 of artificial graphite to silicon-carbon composite particles.

### <Preparation of positive electrode plate>

Positive electrode active material lithium cobaltate (LiCoO₂), positive electrode conductive agent Super P, and positive electrode binder polyvinylidene fluoride (PVDF) were mixed at a mass ratio of 97:1.4:1.6, with N-methylpyrrolidone (NMP) added as a solvent, to prepare a slurry with a solid content of 72wt%, and the slurry was stirred under an action of a vacuum mixer to obtain a positive electrode slurry. The positive electrode slurry was evenly applied onto one surface of a 12 µm thick positive electrode current collector aluminum foil, and the aluminum foil was dried at 85°C to obtain a positive electrode plate coated with a positive electrode material layer on one surface, with a coating weight of 19 mg/cm² of the positive electrode material layer. Then the foregoing steps were repeated on another surface of the aluminum foil to obtain a positive electrode plate coated with positive electrode material layers on two surfaces. After cold pressing, cutting, slitting, and drying in vacuum at 85°C for 4 h, a positive electrode plate with dimensions of 74 mm × 867 mm was obtained for later use, where the compacted density of the positive electrode material layer after cold pressing was 4.2 g/cc.

### <Preparation of electrolyte>

In an argon glove box with water content less than 10 ppm, ethylene carbonate (EC), ethyl methyl carbonate (EMC), and diethyl carbonate (DEC) were mixed to uniformity at a weight ratio of EC:EMC:DEC = 30:50:20 to obtain a base solvent, then lithium salt lithium hexafluorophosphate (LiPF₆) was added to the base solvent and stirred to uniformity to obtain an electrolyte, where based on a mass of the electrolyte, a mass percentage of the lithium salt was 12.5% and the remainder was the base solvent.

### <Preparation of separator>

A porous polyethylene (PE) film (provided by Celgard) having a thickness of 7 µm was used as the separator.

### <Preparation of lithium-ion battery>

The positive electrode plate, separator, negative electrode plate, and separator were stacked in sequence, so that the separator was sandwiched between the positive electrode plate and the negative electrode plate for separation, and winding was performed to obtain an electrode assembly. After tab welding, the electrode assembly was placed into an aluminum-plastic film packaging bag and dried at 80°C, and then the electrolyte was injected, followed by processes such as vacuum sealing, standing, formation, shaping, and capacity testing, to obtain a pouch lithium-ion battery.

### Examples 1-2 to 1-10

The same as Example 1-1 except that the related preparation parameters were adjusted according to Table 1.

### Examples 1-11 and 1-12

The same as Example 1-1 except that the particle size Dᵥ50 of the composite carbon skeleton was adjusted to make the particle size Dᵥ50 of the silicon-carbon composite particles as shown in Table 1.

### Example 1-13

The same as Example 1-1 except that the silicon-carbon composite particles were prepared according to the following method.

### <Preparation of silicon-carbon composite particles>

100 g of the composite carbon skeleton (Dᵥ50 = 8.7 µm, Dᵥ99 = 18.9 µm) was heated at a heating rate v of 10°C/min in an argon atmosphere to a temperature T1 of 450°C and maintained at that temperature for a period of time t1 of 10 min, and then the atmosphere was switched to a silane gas mixture for deposition in the silane gas mixture to obtain an intermediate; where a deposition time t2 was 10 h; and the silane gas mixture was composed of silane and argon, and based on a mass of the silane gas mixture, a mass percentage W10 of silane was 20%, and a mass percentage W11 of argon was 80%.

Then the intermediate was placed in a tetrahydrofuran solution containing petroleum pitch (5 g of petroleum pitch and 100 mL of tetrahydrofuran) to obtain an organic solution. The organic solution was heated in a nitrogen atmosphere to 100°C to evaporate, and carbon coating treatment was performed at a temperature T2 of 700°C for a period of time t3 of 2 h to obtain silicon-carbon composite particles.

### Examples 1-14 to 1-19

The same as Example 1-13 except that the related preparation parameters were adjusted according to Table 1.

### Examples 2-1 to 2-13

The same as Example 1-1 except that the related preparation parameters were adjusted according to Table 2.

### Examples 3-1 to 3-6

The same as Example 1-1 except that the related preparation parameters were adjusted according to Table 3.

### Examples 3-7 to 3-10

The same as Example 1-1 except that the compacted density of the negative electrode material layer after cold pressing was adjusted to make the compacted density of the negative electrode material layer of the secondary battery at a 50% state of charge as shown in Table 3.

### Examples 4-1 to 4-7

The same as Example 1-1 except that a first compound was added in <preparation of electrolyte> and that the relevant preparation parameters were adjusted according to Table 4. When the mass percentage of the first compound added changed, the mass percentage of the base solvent changed accordingly, while the mass percentage of the lithium salt and the weight ratio of EC, EMC, and DEC remained unchanged.

### Comparative Example 1-1

The same as Example 1-1 except that the related preparation parameters were adjusted according to Table 1.

### Comparative Example 1-2

The same as Example 1-13 except that the related preparation parameters were adjusted according to Table 1. The preparation parameters, material performance parameters, and electrical performance parameters of each example and comparative example are shown in Tables 1 to 4.

**Table 1**

| | T1 (°C) | t2 (h) | T2 (°C) | t3 (h) | Carbon source | Organic solvent | H1 (nm) | Dᵥ50 (µm) | σ (S/m) | Gas generation voltage during over-discharge (V) | TSR (%) |
|---|---|---|---|---|---|---|---|---|---|---|---|
| Example 1-1 | 450 | 10 | 700 | 3 | / | / | 4.4 | 8.8 | 12.3 | 2.3 | 5.3 |
| Example 1-2 | 400 | 30 | 700 | 3 | / | / | 4.3 | 8.8 | 12.6 | 2.4 | 6.1 |
| Example 1-3 | 480 | 2 | 700 | 3 | / | / | 4.3 | 8.8 | 12.5 | 2.4 | 5.9 |
| Example 1-4 | 450 | 10 | 620 | 3 | / | / | 3.5 | 8.8 | 8.5 | 2.5 | 6.3 |
| Example 1-5 | 450 | 10 | 640 | 3 | / | / | 3.7 | 8.8 | 8.7 | 2.5 | 6.1 |
| Example 1-6 | 450 | 10 | 660 | 3 | / | / | 3.8 | 8.8 | 9.4 | 2.4 | 5.9 |
| Example 1-7 | 450 | 10 | 680 | 3 | / | / | 4.2 | 8.8 | 11.7 | 2.4 | 5.9 |
| Example 1-8 | 450 | 10 | 700 | 2 | / | / | 4.1 | 8.7 | 11.9 | 2.3 | 5.3 |
| Example 1-9 | 450 | 10 | 700 | 5 | / | / | 4.7 | 8.9 | 12.7 | 2.1 | 5.1 |
| Example 1-10 | 450 | 10 | 700 | 6 | / | / | 5.2 | 9.1 | 13.8 | 2 | 4.9 |
| Example 1-11 | 450 | 10 | 700 | 3 | / | / | 4.4 | 5 | 12.2 | 2.4 | 5.5 |
| Example 1-12 | 450 | 10 | 700 | 3 | / | / | 4.4 | 12 | 12.5 | 2.2 | 5.2 |
| Example 1-13 | 450 | 10 | 700 | 2 | Petroleum pitch | Tetrahydrofuran | 3.1 | 8.8 | 11.7 | 2.5 | 6.3 |
| Example 1-14 | 450 | 10 | 720 | 2 | Petroleum pitch | Tetrahydrofuran | 3.3 | 8.8 | 11.9 | 2.4 | 5.9 |
| Example 1-15 | 450 | 10 | 740 | 2 | Petroleum pitch | Tetrahydrofuran | 3.3 | 8.9 | 12.7 | 2.3 | 5.3 |
| Example 1-16 | 450 | 10 | 760 | 2 | Petroleum pitch | Tetrahydrofuran | 3.5 | 9 | 13.8 | 2 | 4.9 |
| Example 1-17 | 450 | 10 | 780 | 2 | Petroleum pitch | Tetrahydrofuran | 3.7 | 9.1 | 14 | 1.9 | 4.8 |
| Example 1-18 | 450 | 10 | 800 | 2 | Petroleum pitch | Tetrahydrofuran | 4.1 | 9.1 | 14.5 | 1.8 | 4.7 |
| Example 1-19 | 450 | 10 | 810 | 2 | Petroleum pitch | Tetrahydrofuran | 4.1 | 9.2 | 14.8 | 1.6 | 4.5 |
| Comparative example 1-1 | 450 | 10 | 600 | 3 | / | / | 2.6 | 8.8 | 7.5 | 2.6 | 16 |
| Comparative example 1-2 | 450 | 10 | 600 | 2 | Petroleum pitch | Tetrahydrofuran | 2.7 | 8.9 | 7.3 | 2.7 | 19 |

| | | | | | | | | | | | |
|---|---|---|---|---|---|---|---|---|---|---|---|
| Note: "/" in Table 1 means that a related preparation parameter does not exist. | | | | | | | | | | | |

From Examples 1-1 to 1-19 and Comparative examples 1-1 and 1-2, it can be seen that in preparation of silicon-carbon composite particles using the method of this application, the temperature for carbon coating treatment is within the range in this application, the powder conductivity of the negative electrode material layer is higher, the gas generation voltage of the lithium-ion battery during over-discharge is lower, and the thickness swelling rate during over-discharge in the cycling process of the lithium-ion battery is lower, indicating that the lithium-ion battery has better safety performance. However, the temperature for carbon coating treatment in Comparative examples 1-1 and 1-2 is too low, the powder conductivity of the negative electrode material layer is low, the gas generation voltage of the lithium-ion battery during over-discharge is high, and the thickness swelling rate during over-discharge in the cycling process of the lithium-ion battery is high, indicating that the safety performance of the lithium-ion battery is poor.

The average thickness of the carbon coating layer usually affects the safety performance of the lithium-ion battery and the specific capacity of the silicon-carbon composite particles. From Examples 1-1 to 1-19, it can be seen that the average thickness of the carbon coating layer is within the range in this application, the powder conductivity of the negative electrode material layer is high, the gas generation voltage of the lithium-ion battery during over-discharge is low, and the thickness swelling rate during over-discharge in the cycling process of the lithium-ion battery is low, indicating that the lithium-ion battery has good safety performance.

The particle size of the silicon-carbon composite particles usually affects the safety performance of the lithium-ion battery. From Examples 1-1, 1-11, and 1-12, it can be seen that the particle size of the silicon-carbon composite particles is within the range in this application, the powder conductivity of the negative electrode material layer is high, the gas generation voltage of the lithium-ion battery during over-discharge is low, and the thickness swelling rate during over-discharge in the cycling process of the lithium-ion battery is low, indicating that the lithium-ion battery has good safety performance. The particle size Dᵥ50 of the silicon-carbon composite particles in Example 1-11 is relatively small. This may affect the cycle life of the lithium-ion battery. The particle size Dᵥ50 of the silicon-carbon composite particles in Example 1-12 is relatively large. This may affect the kinetic performance of the lithium-ion battery.

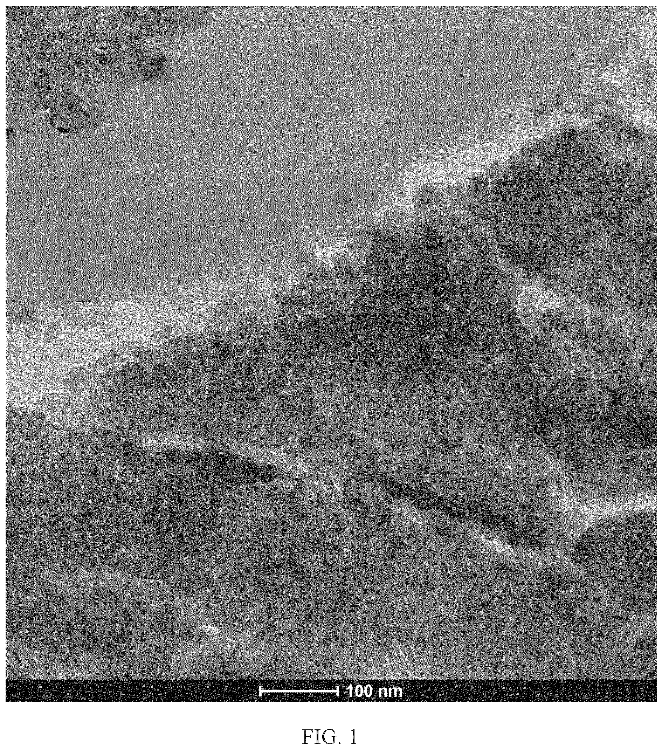

As can be seen from FIG. 1, the average thickness of the carbon coating layer of the silicon-carbon composite particles in Example 1-1 is 8 nm.

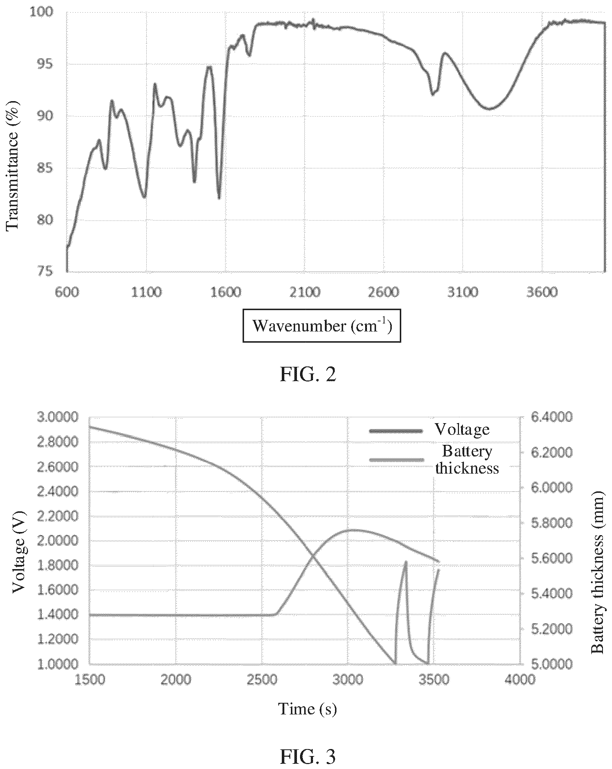

As can be seen from FIG. 2, in the infrared spectrum of the powder of the negative electrode material layer in Example 1-1, there is a characteristic peak at 1550 cm⁻¹ to 1560 cm⁻¹, and the characteristic peak is a characteristic peak of lithium carboxylate.

As can be seen from FIG. 3, the lithium-ion battery in Example 1-1 starts to generate gas at a voltage of 2.3 V and at an elapsed time of 2600s and the thickness of the lithium-ion battery increases, and when the voltage of the lithium-ion battery drops to 1.0 V, the thickness of the lithium-ion battery eventually reaches 5.58 mm, and the thickness swelling rate is 5.3%.

**Table 2**

| | W4 (%) | W5 (%) | W3 (%) | Binder | | Conductive agent | | W1 (%) | W2 (%) | W8 (%) | σ (S/m) | Gas generation voltage during over-discharge (V) | TSR (%) |
|---|---|---|---|---|---|---|---|---|---|---|---|---|---|
| | | | | Type | W6 (%) | Type | W7 (%) | | | | | | |
| Example 1-1 | 20 | 80 | 97.7 | PAALi | 2 | Single-walled carbon nanotubes | 0.3 | 8 | 88 | 0.6 | 12.3 | 2.3 | 5.3 |
| Example 2-1 | 5 | 95 | 97.7 | PAALi | 2 | Single-walled carbon nanotubes | 0.3 | 5 | 90 | 0.6 | 13.9 | 2.3 | 7.5 |
| Example 2-2 | 30 | 70 | 97.7 | PAALi | 2 | Single-walled carbon nanotubes | 0.3 | 9 | 87 | 0.6 | 11.8 | 2.4 | 8.2 |
| Example 2-3 | 20 | 80 | 97.7 | Carboxymethyl cellulose | 2 | Single-walled carbon nanotubes | 0.3 | 8 | 88 | / | 12.3 | 2.3 | 7.4 |
| Example 2-4 | 20 | 80 | 99.3 | PAALi | 0.4 | Single-walled carbon nanotubes | 0.3 | 8 | 89 | 0.3 | 14.2 | 2.3 | 9.5 |
| Example 2-5 | 20 | 80 | 97.2 | PAALi | 2.5 | Single-walled carbon nanotubes | 0.3 | 8 | 87 | 1.3 | 11.2 | 2.7 | 8.3 |
| Example 2-6 | 20 | 80 | 99.5 | PAALi | 0.2 | Single-walled carbon nanotubes | 0.3 | 8 | 90 | 0.2 | 14.5 | 2.3 | 15.5 |
| Example 2-7 | 20 | 80 | 97 | PAALi | 2.7 | Single-walled carbon nanotubes | 0.3 | 8 | 86 | 1.5 | 11 | 2.7 | 10.2 |
| Example 2-8 | 20 | 80 | 97.7 | PAALi | 2 | Multi-walled carbon nanotubes | 0.3 | 8 | 88 | 0.6 | 11.7 | 2.4 | 7.3 |
| Example 2-9 | 20 | 80 | 97.7 | PAALi | 2 | Super P | 0.3 | 8 | 88 | 0.6 | 10.4 | 2.4 | 7.9 |
| Example 2-10 | 20 | 80 | 97.7 | PAALi | 2.2 | Single-walled carbon nanotubes | 0.1 | 8 | 88 | 0.7 | 10.8 | 2.4 | 9.2 |
| Example 2-11 | 20 | 80 | 97.7 | PAALi | 1.8 | Single-walled carbon nanotubes | 0.5 | 8 | 88 | 0.5 | 14.1 | 2.3 | 7.7 |
| Example 2-12 | 20 | 80 | 97.7 | PAALi | 2.25 | Single-walled carbon nanotubes | 0.05 | 8 | 88 | 0.7 | 10.7 | 2.6 | 13.5 |
| Example 2-13 | 20 | 80 | 97.7 | PAALi | 1.5 | Single-walled carbon nanotubes | 0.8 | 8 | 88 | 0.5 | 14.6 | 2.6 | 10.2 |

From Examples 1-1 and 2-1 to 2-13, it can be seen that the mass percentages of silicon element and carbon element in the negative electrode material layer and the powder conductivity of the negative electrode material layer are within the range in this application, the gas generation voltage of the lithium-ion battery during over-discharge is low, and the thickness swelling rate during over-discharge in the cycling process of the lithium-ion battery is low, indicating that the lithium-ion battery has good safety performance.

The mass percentage of silicon-carbon composite particles and the mass percentage of the carbon material usually affect the safety performance of the lithium-ion battery. From Examples 1-1, 2-1, and 2-2, it can be seen that with the mass percentage of the silicon-carbon composite particles and the mass percentage of the carbon material being regulated within the ranges in this application, the powder conductivity of the negative electrode material layer is high, the gas generation voltage of the lithium-ion battery during over-discharge is low, and the thickness swelling rate during over-discharge in the cycling process of the lithium-ion battery is low, indicating that the lithium-ion battery has good safety performance. As the mass percentage of silicon-carbon composite particles increases and the mass percentage of the carbon material decreases, the powder conductivity of the negative electrode material layer decreases, the gas generation voltage of the lithium-ion battery during over-discharge first decreases and then increases, and the thickness swelling rate during over-discharge in the cycling process of the lithium-ion battery first decreases and then increases. Based on the masses of silicon-carbon composite particles and the carbon material, when the mass percentage of silicon-carbon composite particles is 20% and the mass percentage of the carbon material is 80%, the gas generation voltage of the lithium-ion battery during over-discharge is low, the thickness swelling rate during over-discharge in the cycling process of the lithium-ion battery is the lowest, and the safety performance of the lithium-ion battery is the best.

The type and percentage of the binder usually affect the safety performance of the lithium-ion battery. From Examples 1-1 and 2-3 to 2-7, it can be seen that with the type and percentage of the binder being regulated within the ranges in this application, the powder conductivity of the negative electrode material layer is high, the gas generation voltage of the lithium-ion battery during over-discharge is low, and the thickness swelling rate during over-discharge in the cycling process of the lithium-ion battery is low, indicating that the lithium-ion battery has good safety performance. The percentage of the binder in Example 2-6 is low, so that the bonding network between active substances is prone to breakage, and the active substances are easy to fall off. This may affect the long-cycle stability and swelling performance of the lithium-ion battery. The percentage of the binder in Example 2-7 is high. This may lead to a lower powder conductivity of the negative electrode material layer and affect the kinetic performance of the lithium-ion battery.

The type and percentage of the conductive agent usually affect the safety performance of the lithium-ion battery. From Examples 1-1 and 2-8 to 2-13, it can be seen that with the type and percentage of the conductive agent being regulated within the ranges in this application, the powder conductivity of the negative electrode material layer is high, the gas generation voltage of the lithium-ion battery during over-discharge is low, and the thickness swelling rate during over-discharge in the cycling process of the lithium-ion battery is low, indicating that the lithium-ion battery has good safety performance.

From Examples 1-1, 2-1, 2-2, and 2-4 to 2-13, it can be seen that the binder includes lithium polyacrylate, and after the lithium-ion battery is discharged to 3.0 V, based on the mass of the negative electrode material layer, the mass percentage of lithium element is within the range in this application, the powder conductivity of the negative electrode material layer is high, the gas generation voltage of the lithium-ion battery during over-discharge is low, and the thickness swelling rate during over-discharge in the cycling process of the lithium-ion battery is low, indicating that the lithium-ion battery has good safety performance.

**Table 3**

| | D (nm) | L (nm) | PD (g/cc) | σ (S/m) | Gas generation voltage during over-discharge (V) | TSR (%) |
|---|---|---|---|---|---|---|
| Example 1-1 | 4 | 10,000 | 1.45 | 12.3 | 2.3 | 5.3 |
| Example 3-1 | 2 | 3,000 | 1.45 | 12.6 | 2.5 | 8.5 |
| Example 3-2 | 3 | 8,000 | 1.45 | 12.7 | 2.4 | 6.1 |
| Example 3-3 | 5 | 20,000 | 1.45 | 12.9 | 2.3 | 7.2 |
| Example 3-4 | 6 | 60,000 | 1.45 | 13.4 | 2.3 | 8.3 |
| Example 3-5 | 1 | 2,000 | 1.45 | 9.7 | 2.5 | 11.7 |
| Example 3-6 | 8 | 80,000 | 1.45 | 13.4 | 2.3 | 10.5 |
| Example 3-7 | 4 | 10,000 | 1.4 | 12.2 | 2.3 | 6.1 |
| Example 3-8 | 4 | 10,000 | 1.5 | 12.2 | 2.3 | 6.2 |
| Example 3-9 | 4 | 10,000 | 1.3 | 12 | 2.3 | 7.3 |
| Example 3-10 | 4 | 10,000 | 1.6 | 12.1 | 2.3 | 6.3 |

The conductive agent includes carbon nanotubes, and the diameter and length of the carbon nanotubes usually affect the safety performance and internal resistance of the lithium-ion battery. From Examples 1-1 and 3-1 to 3-6, it can be seen that with the diameter and length of the carbon nanotubes being regulated within the ranges in this application, the powder conductivity of the negative electrode material layer is high, the gas generation voltage of the lithium-ion battery during over-discharge is low, and the thickness swelling rate during over-discharge in the cycling process of the lithium-ion battery is low, indicating that the lithium-ion battery has good safety performance.

The compacted density of the negative electrode material layer of the lithium-ion battery at a 50% state of charge usually affects the safety performance and energy density of the lithium-ion battery. From Examples 1-1 and 3-7 to 3-10, it can be seen that the compacted density of the negative electrode material layer of the lithium-ion battery at a 50% state of charge is within the range in this application, the powder conductivity of the negative electrode material layer is high, the gas generation voltage of the lithium-ion battery during over-discharge is low, and the thickness swelling rate during over-discharge in the cycling process of the lithium-ion battery is low, indicating that the lithium-ion battery has good safety performance. In Example 3-9, the compacted density of the negative electrode material layer of the lithium-ion battery at a 50% state of charge is too small. This may affect the energy density of the lithium-ion battery. In Example 3-10, the compacted density of the negative electrode material layer of the lithium-ion battery at a 50% state of charge is too large, and this may cause a higher degree of crushing of the silicon-carbon composite particles, exposing more silicon, thus leading to a higher thickness swelling rate of the lithium-ion battery.

**Table 4**

| | First compound | | Gas generation voltage during over-discharge (V) | TSR (%) |
|---|---|---|---|---|
| | Type | W9 (%) | | |
| Example 1-1 | / | / | 2.3 | 5.3 |
| Example 4-1 | Fluoroethylene carbonate | 5 | 2.0 | 4.2 |
| Example 4-2 | 1,3-propane sultone | 5 | 2 | 4.1 |
| Example 4-3 | Ethylene sulfate | 5 | 1.8 | 3.7 |
| Example 4-4 | Fluoroethylene carbonate | 3 | 2.1 | 4.5 |
| Example 4-5 | Fluoroethylene carbonate | 8 | 2.3 | 4.4 |
| Example 4-6 | Fluoroethylene carbonate | 2 | 2.2 | 5.2 |
| Example 4-7 | Fluoroethylene carbonate | 10 | 2.3 | 5.1 |

The electrolyte includes a first compound, and the type and percentage of the first compound usually affect the safety performance of the lithium-ion battery. From Examples 1-1 and 4-1 to 4-7, it can be seen that the electrolyte includes the first compound, and with the type and percentage of the first compound in the electrolyte being regulated within the ranges in this application, the gas generation voltage of the lithium-ion battery during over-discharge is low, and the thickness swelling rate during over-discharge in the cycling process of the lithium-ion battery is low, indicating that the lithium-ion battery has good safety performance. In Example 4-6, the mass percentage of the first compound is too low. This may affect the cycle performance of the lithium-ion battery. In Example 4-7, the mass percentage of the first compound is too high. This may lead to an increase in side reactions and cannot further suppress the gas generation during over-discharge in the cycling process of the lithium-ion battery. In addition, the lithium-ion battery in Example 4-7 is prone to gas generation at a high state of charge, and is also prone to gas generation under high-temperature conditions.

It should be noted that relational terms such as "first" and "second" herein are only used to distinguish one entity or operation from another entity or operation, and do not necessarily require or imply that there is any such actual relationship or order between these entities or operations. In addition, the terms "include", "comprise", or any of their variants are intended to cover a non-exclusive inclusion, such that a process, method, or article that includes a series of elements includes not only those elements but also other elements that are not expressly listed, or further includes elements inherent to such process, method, or article.

Some embodiments in this specification are described in a related manner. For a part that is the same or similar between different embodiments, reference may be made between these embodiments. Each embodiment focuses on differences from other embodiments.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A secondary battery, comprising a positive electrode plate, a negative electrode plate, an electrolyte, and a separator, wherein the negative electrode plate comprises a negative electrode current collector and a negative electrode material layer disposed on at least one surface of the negative electrode current collector; the negative electrode material layer comprises a negative electrode active material, a binder, and a conductive agent; **characterized in that**, the negative electrode active material comprises a carbon material and silicon-carbon composite particles; based on a mass of the negative electrode material layer, a mass percentage of silicon element in the negative electrode material layer is 4.4% to 10.5%, a mass percentage of carbon element in the negative electrode material layer is 85% to 90%; and a powder conductivity of the negative electrode material layer is 8 S/m to 15 S/m.

2. The secondary battery according to claim 1, **characterized in that**, in a charge-discharge test of the secondary battery, a thickness swelling rate of the secondary battery is less than 15%;
the charge-discharge test of the secondary battery includes: charging the secondary battery at a constant current of 1C to 4.5 V and discharging at a constant current of 0.5C to 3.0 V for 300 cycles, then discharging at 0.01C to 3.0 V, discharging at 10 mA to 1.0 V, and further discharging at 5 mA to 1.0 V.

3. The secondary battery according to claim 1 or 2, **characterized in that**, wherein the silicon-carbon composite particle comprises a carbon carrier, elemental silicon, and a carbon coating layer; and an average thickness of the carbon coating layer is in a range of 2.5 nm to 12 nm.

4. The secondary battery according to any one of claims 1 to 3, **characterized in that**, the carbon material comprises at least one selected from the group consisting of graphite, hard carbon, and soft carbon, and based on a mass of the silicon-carbon composite particles and the carbon material, a mass percentage of the silicon-carbon composite particles is 5% to 30%, and a mass percentage of the carbon material is 70% to 95%.

5. The secondary battery according to any one of claims 1 to 4, **characterized in that**, wherein particle size Dᵥ50 of the silicon-carbon composite particles is in a range of 5 µm to 12 µm.

6. The secondary battery according to any one of claims 1 to 5, **characterized in that**, the secondary battery meets at least one of the following characteristics:
(1) the binder comprises at least one selected from the group consisting of lithium polyacrylate, carboxymethyl cellulose, and polyacrylic acid; and based on the mass of the negative electrode material layer, a mass percentage of the binder is 0.4% to 2.5%; or
(2) the conductive agent comprises at least one selected from the group consisting of carbon nanotubes, conductive carbon black, carbon fiber, flake graphite, graphene, and conductive polymers, and based on the mass of the negative electrode material layer, a mass percentage of the conductive agent is 0.1% to 0.5%.

7. The secondary battery according to any one of claims 1 to 6, **characterized in that**, the binder comprises lithium polyacrylate, and a characteristic peak appears at 1550 cm⁻¹ to 1560 cm⁻¹ in an infrared spectrum of powder of the negative electrode material layer.

8. The secondary battery according to any one of claims 1 to 7, **characterized in that**, the binder comprises lithium polyacrylate, and after the secondary battery is discharged to 3.0 V, based on the mass of the negative electrode material layer, a mass percentage of lithium element is 0.2% to 3%.

9. The secondary battery according to any one of claims 1 to 8, **characterized in that**, the conductive agent comprises carbon nanotubes, wherein a diameter of the carbon nanotubes is 2 nm to 6 nm, and a length of the carbon nanotubes is 3,000 nm to 60,000 nm.

10. The secondary battery according to any one of claims 1 to 9, **characterized in that**, a compacted density of the negative electrode material layer is 1.4 g/cc to 1.5 g/cc at a 50% state of charge.

11. The secondary battery according to any one of claims 1 to 10, **characterized in that**, the electrolyte comprises a first compound, the first compound comprises at least one selected from the group consisting of fluoroethylene carbonate, difluoroethylene carbonate, 1,3-propane sultone, and ethylene sulfate, and based on a mass of the electrolyte, a mass percentage of the first compound is 3% to 8%.

12. A method for preparing the secondary battery of claim 1, the method comprising following steps: preparing the positive electrode plate, the negative electrode plate, the electrolyte, and the separator, and obtaining the secondary battery by assembling;
**characterized in that**, a preparation method of the silicon-carbon composite particles in the negative electrode plate comprises the following steps:
(1) heating a carbon carrier in an inert atmosphere at a heating rate of 5°C/min to 20°C/min to a temperature T1 of 400°C to 480°C, maintaining the temperature for a period of time t1 between 10 min and 60 min, and then conducting deposition in a silane gas mixture to obtain an intermediate; wherein a deposition time t2 is 2 h to 30 h; and the silane gas mixture is composed of silane and inert gas, and based on a mass of the silane gas mixture, a mass percentage of silane is 10% to 50%, and a mass percentage of inert gas is 50% to 90%; and
(2) performing carbon coating treatment on the intermediate to obtain the silicon-carbon composite particles; wherein a method for the carbon coating treatment comprises one of a liquid phase method, a gas phase method, or a gas-liquid coupling method; a carbon source comprises at least one of coal tar pitch, petroleum pitch, acetylene, propylene, natural gas, ethylene, or cyclohexane; a temperature T2 for the carbon coating treatment is 620°C to 810°C; and a period of time t3 for the carbon coating treatment is 1 h to 6 h.

13. The method according to claim 12, **characterized in that**, the method for the carbon coating treatment comprises the liquid phase method, comprising the following steps: placing the intermediate in an organic solvent containing a carbon source to obtain an organic solution, evaporating the organic solution, and performing the carbon coating treatment in the inert atmosphere to obtain the silicon-carbon composite particles; wherein the carbon source comprises at least one of petroleum pitch or coal tar pitch; the organic solvent comprises at least one of tetrahydrofuran, n-hexane, or xylene; the temperature T2 for the carbon coating treatment is 700°C to 810°C, preferably, T2 is 720°C to 810°C; and the period of time t3 for the carbon coating treatment is 1 h to 2 h.

14. The method according to claim 12 or 13, **characterized in that**, the method for the carbon coating treatment comprises a gas phase method, comprising the following step: performing the carbon coating treatment on the intermediate in a reducing atmosphere to obtain the silicon-carbon composite particles; wherein the reducing atmosphere comprises at least one of acetylene, propylene, natural gas, ethylene, or cyclohexane; the temperature T2 for the carbon coating treatment is 620°C to 700°C; and the period of time t3 for the carbon coating treatment is 2 h to 6 h.

15. An electronic apparatus, comprising the secondary battery according to any one of claims 1 to 11 or a secondary battery prepared by using the method according to any one of claims 12 to 14.
